# EUROPEAN PATENT SPECIFICATION

(11) **EP 2 165 796 B1**
(45) Date of publication and mention of the grant of the patent: **26.10.2011**
(21) Application number: 08105399.3
(22) Date of filing: 22.09.2008
(51) Int. Cl.: B23K 26/38

(54) **Method for drilling micro-hole**
Verfahren zum Bohren eines Mikrolochs
Procédé de perçage de micro-trou

(43) Date of publication of application: 24.03.2010
(73) Proprietor: National Taiwan University, Taipei City 106 (TW)
(72) Inventor: Wo, Andrew M., Taiwan 106, Taipei City (TW); Jong, De-Shien, Taiwan 106, Taipei City (TW); Chen, Chang-Yu, Taiwan 106, Taipei City (TW); Liu, Kuan-Ting, Taiwan 106, Taipei City (TW); Hsiung, Lo-Chang, Taiwan 106, Taipei City (TW)
(74) Representative: Harrison, Paul Richard

(56) References cited:
- EP-A- 0 976 487
- WO-A-02/070178
- WO-A-02/076666
- US-A- 5 126 532
- US-A1- 2002 017 511

## Description

The present invention relates to a method for making a micro-hole structure, and in particular to a method for making an hourglass shape micro-hole structure with a reflow section and a structure thereof.

### BACKGROUND OF THE INVENTION

Heretofore, the fabrication of a micro-hole that traps and positions a cell is generally carried out with micro-machining, such as micro-electro-mechanical system (MEMS), which is a photolithographic technique employing micro-manufacturing processes of exposure, development, and etching for a micro-opening of the size of a cell. Such a process is disadvantageous of using expensive facility and being complicated and consuming labor and time.

An example is US Patent No. 6, 699,697, which discloses a fabrication method for making a planar microelectrode for measuring ion channel of a cell membrane, featuring adoption of photolithography in combination with molding of polymer PDMS (poly-dimethylsiloxane) to realize efficient formation of tiny holes for trapping cell and forming high resistance to measure cell-membrane surface ion-channel signals. Another example is US Patent No. 6,776,896, which discloses a method for positioning cells for the measurement of electrophysiological signal of the cells, featuring formation of a flow field around an aperture with a structural design assisted by a perfusion system to facilitate movement of a cell toward the aperture thereby realizing precise positioning of the cell on the aperture.

Laser drilling is commonly employed in the industry, which uses high energy carried by excitation of laser to spontaneously melt a material for forming a hole. This is an effective and efficient manner for fabrication of micro holes.

T. Sordel et al. discloses in a literature of "Hourglass SiO₂ coating increases the performance of planar patch-clamp," published in J Biotechnology 125 (1), 2006, that the hourglass SiO₂ coating enhances the performance of planar patch clamp chip. The straight hole is essentially fabricated by standard photolithography on silicon substrate. SiO₂ is coated on the pore to form an hourglass structure by plasma-enhanced chemical vapor deposition (PECVD). The reference proves that the hourglass feature performs better seal quality.

K. G Klemic et al. discloses in Pflugers Arch Eur J Physiol 449 (6), 564-572 an air-molding technique to create a micro-hole on polydimethylsiloxane (PDMS) membrane. A metal plate with a 2 µm through hole is firstly defined. PDMS is then coated on the metal plate which the air forces on the hole to penetrate the PDMS membrane and is cured rapidly during the air blowing. The size of the aperture is defined by the metal through hole. This is an economic fabrication method, but it needs sophisticated operation. The aperture presents a flat surface that contact with cell during patch-clamp experiment.

Also, T. Lehnert et al. shows how hollow SiO2 micronozzles for electrical measurements on living cells are realized in Applied Physics Letters 81 (26), P. 5063-5065. It demonstrates a fabrication method to generate a hollow SiO₂ micronozzle to mimic the traditional micropipette pressing against the cell membrane. The fabrication comprises a series of dry etching and deposition procedures. The result shows that the chip is unable to obtain gigaseal.

A literature published in Microfluidics and Nanofluidics 3 (1), P. 109-117 discloses that a phosphosilicate glass (PSG) reflow is used to form a 3-dimentional micro-aperture. A series of wet etching and dry etching is performed to create a funnel-liked aperture. PSG is then deposit on the aperture surface and heated to reflow to obtain very smooth surface. The opening of the aperture is quite similar to our hourglass-shaped aperture. The result also demonstrates the capability of gigaseal formation. However, the fabrication process is complicated and costly.

In the 9^{th} International Conference on Miniaturized Systems for Chemistry and Life Sciences held at Boston, Massachusetts, USA held at October 9-13, 2005, Levent Yobas et al. present a fabrication method of lateral glass capillaries for patch clamping. It utilizes keyhole-void formation and thermal-reflow of phosphosilicate glass (PSG) in silicon trenches to fabricate lateral glass capillaries. The chip allows optical observation during patch-clamp experiment to optimally choose good cells for patch. Hence the gigaseal rate is quite good, up to 60%.

Also, Adrian Y. Lau et al. presents in the 9^{th} International Conference on Miniaturized Systems for Chemistry and Life Sciences about the raised lateral patch clamp array in open-access fluidic system. PDMS is a widely used material for microchannel fabrication. The presentation demonstrates the usage of microchannel opening as cell patch site for ion channel recording. The opening is a 2 X 2 µm square. This is a cheap and simple fabrication method, but it is very difficult to have gigaseal formation.

Biophysical Journal 82 (6), P. 3056-3062 in 2002 publishes an article of "Whole cell patch clamp recording performed on a planar glass chip" of N. Fertig et al. Quartz is chosen as substrate due to its excellent electrical properties. The micro-aperture is generated by wet etching and ion track etching. The aperture presents a flat surface that contacts with cell during patch-clamp experiment. Gigaseal is proven capable.

R. Pantoja et al. publishes the usage of photo-lithographical process to fabricate micro-apertures on silicon chips in Biosensors and Bioelectronics 20 (3) of 2004, P. 509-517. Double side dry etching is performed to obtain 0.7-2 µm aperture. The aperture also presents a flat surface.

K. Schroeder publishes an article in Journal of Biomolecular Screening 8 (1), P. 50-64 in 2003. The patch clamp chip in this article is fabricated by laser drilling technique on polyimide. The price could be quite cheap, but the chip could not provide gigaseal formation, which limits its application on measuring precise ion channel activities.

Another paper presented in 9^{th} International Conference on Miniaturized Systems for Chemistry And Life Sciences held at Boston, Massachusetts, USA at October 9-13, 2005 by A. Minamino et al is about the fabrication of micropipette chips for simultaneous electrophysiological and optical measurements. Photo-lithographical process is used to fabricate micro-apertures on silicon chips. Double side dry etching is performed to obtain 0.5-2 µm aperture. The aperture also presents a flat surface.

An example is shown in US Patent No. 4,948,941, which discloses a method of laser drilling that produces a uniform hole in a substrate and features placing a sacrificial member over the substrate, whereby the laser drilling forms a tapering portion of a drilled hole only in the sacrificial member and the portion of the drilled hole formed in the substrate is a micro-hole that maintains substantially uniform. The sacrificial member is then removed and a micro-hole of substantially uniform dimension is thus obtained. US Patent No. 6,642,477 discloses a method for laser drilling that produces a counter-tapered micro-hole, featuring applying regular laser drilling to form a tapered micro-hole in a substrate and then displacing and rotating the substrate to change the drilling site and laser incidence angle for forming a counter-tapered micro-hole. Another example is US Patent No. 7,019,257, which discloses a laser drilling method for forming a micro-hole that is comprised of an end of a counter-tapered shape and an end of cylindrical shape, featuring first applying regular laser drilling to form a uniform micro-hole of a suitable size in a substrate and then effecting displacement and rotation of the substrate, with precisely calculated angle and location of laser incidence to thereby form a micro-hole of a counter-tapered shape.

US 2002/0017511 teaches a method of forming a micro through-hole by laser ablation in two steps, preferably using two lasers but alternatively using a single laser, so as to form various profiles.

However, those conventional techniques are only useful in forming micro-holes of conic (tapering) or cylindrical shape and it is in general difficult to form a hole of a specially-configured cross section with the conventional techniques.

### SUMMARY OF THE INVENTION

Therefore, an objective of the present invention is to provide a manufacturing method therefor for making a micro-hole having a unique configuration.

To achieve the above objective, in accordance with the present invention, a substrate having first and second surfaces is provided, and a working energy source carrying a predetermined working energy is projected onto a predetermined drilling site on the first surface of the substrate.

In a predetermined period of time of projection of the working energy source, the working energy source melts a portion of the substrate at the drilling site and defines a first opening in the first surface of the substrate and further penetrates into the substrate to form a working energy entering section in the substrate next to the first surface until the working energy source penetrates through the second surface of the substrate thereby forming a micro-hole that extends through both the first and second surfaces of the substrate.

In the micro-hole, a portion of the substrate next to the second surface that is melted by the working energy source is in a molten condition and reflows in a direction opposite to the projection of the working energy source to thereby form a reflow section in the micro-hole next to the second surface of the substrate, also defining a second opening in the second surface of the substrate, and forming a through hole section between the working energy entering section and the reflow section. The reflow section extends from the second opening to and communicates the through hole section and has a bore diameter converging from the second opening toward the through hole section.

The method of the present invention allows for fabrication of a micro-hole smaller than 10 micrometers and having an unsymmetrical hourglass like cross-section. Such a configuration is well suitable for trapping and positioning a cell for measurement of ion channel of cellular membrane with substantially increased rate of success. The method of the present invention is economic and efficient and remarkably reduces manufacturing costs. In addition, the micro-hole structure in accordance with the present invention can be arranged in an array or can be integrated with a micro-fluidic system to provide an efficient drug screening platform.

Further, the present invention also features the adoption of two or more stages emission of laser pulses as a working energy source for forming a micro-hole in a substrate to be machined whereby precise control of the bore diameter can be realized at the time when a reflow section of the micro-hole is being formed in the substrate next to a second surface of the substrate.

### BRIEF DESCRIPTION OF THE DRAWINGS

The present invention will be apparent to those skilled in the art by reading the following description of the best mode for carrying out the present invention, with reference to the attached drawings, in which:
Figure 1 illustrates fabrication of a micro-hole structure in accordance with a first embodiment of the present invention and an arrangement for carrying out the method;
Figure 2 is a perspective view illustrating a substrate in which a micro-hole structure is formed;
Figure 3 is a cross-sectional view illustrating a working energy source melting through a substrate in accordance with the method of making a micro-hole structure of the present invention;
Figure 4 is a cross-sectional view of a micro-hole structure formed in accordance with the present invention;
Figure 5 shows a flow chart of the method of forming a micro-hole structure in accordance with the present invention;
Figure 6 shows a flow chart of the method of forming a micro-hole structure in accordance with a second embodiment of the present invention;
Figure 7 demonstrates an example of a waveform of two-stage emission of laser pulses serving as a working energy source in forming a micro-hole structure in accordance with the second embodiment of the present invention;
Figure 8 demonstrates another example of a waveform of two-stage emission of laser pulses serving as a working energy source in forming a micro-hole structure;
Figure 9 demonstrates a third example of a waveform of two-stage emission of laser pulses serving as a working energy source in forming a micro-hole structure; and
Figure 10 demonstrates a fourth example of a waveform of two-stage emission of laser pulses serving as a working energy source in forming a micro-hole structure.

### DETAILED DESCRIPTION OF THE PREFERRED EMBODIMENTS

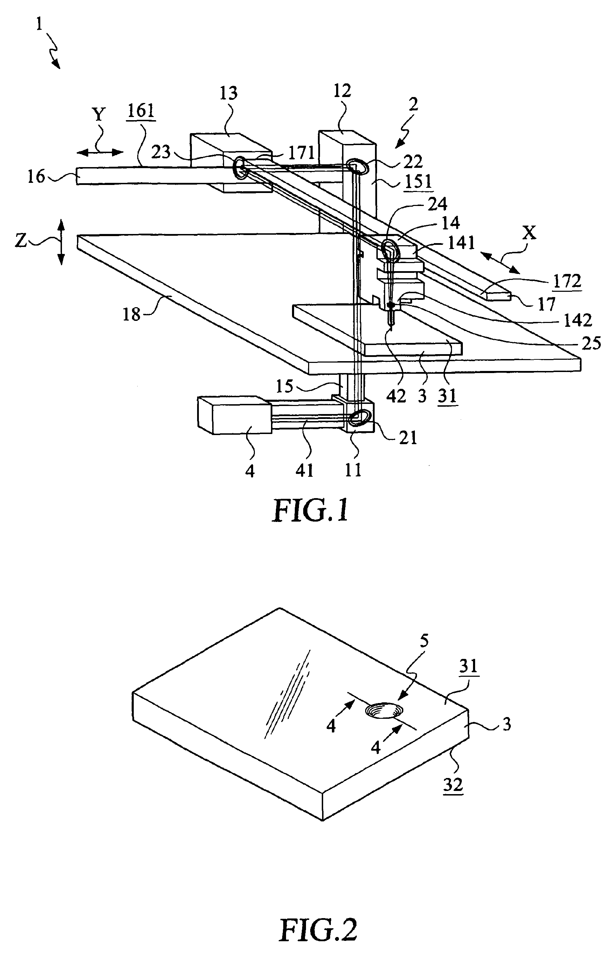

With reference to the drawings and in particular to Figure 1, which illustrates drilling of a micro-hole in a substrate, which is generally designated at 3 in Figure 1, in accordance with the present invention by using an arrangement including an optic operation mechanism 1, a laser beam modulation lens set 2, and a working energy source generator 4. The working energy source generator 4 can be for example a laser generator, but is not limited thereto. The working energy source generator 4 can also be replaced by micro-electrical-discharge machining facility and technique, or other technique or facility that effect hole-drilling or thermal-melting on a substrate. In the later case, the optic operation mechanism 1 and the laser beam modulation lens set 2 can be omitted.

The optic operation mechanism 1 comprises a first reflector carrier 11, a second reflector carrier 12, a third reflector carrier 13, a fourth reflector carrier 14, a first support member 15, a second support member 16, a third support member 17, and a working stage 18. The first reflector carrier 11 is arranged at a lower end of the first support member 15, while the second reflector carrier 12 is arranged at an upper end of the first support member 15. The third reflector carrier 13 is coupled to a support-member coupling end 171 of the third support member 17 and the fourth reflector carrier 14 is coupled to a carrier coupling edge 172 of the third support member 17. The third support member 17 is coupled to a support-member coupling edge 161 of the second support member 16. The working stage 18 is coupled to a stage coupling edge 151 of the first support member 15.

The laser beam modulation lens set 2 comprises a first reflector 21, a second reflector 22, a third reflector 23, a fourth reflector 24, and a focus lens 25. The first reflector 21 is arranged in the first reflector carrier 11. The second reflector 22 is arranged in the second reflector carrier 12. The third reflector 23 is arranged in the third reflector carrier 13. The fourth reflector 24 is arranged on a reflection end 141 of the fourth reflector carrier 14, while the focus lens 25 is arranged on a focus end 142 of the fourth reflector carrier 14.

Referring to Figure 2, with the above described arrangement, the substrate 3 can be subjected to a drilling process to form a micro-hole structure 5 at a selected drilling position thereon. The micro-hole structure 5 fabricated with the present invention has a smooth hole circumference and is free of debris and cracks, whereby the micro-hole structure 5 is applicable to trapping and positioning of a cell and measurement of physiological signals of the cell. Due to the unique configuration of the micro-hole structure 5, tight sealing can be formed between the cell and the substrate, which in the embodiment illustrated is made of glass, for effecting measurement of electrophysiological signals of cell membrane.

Referring to Figures 1-3, in accordance with the method of fabricating micro-hole of the present invention, a substrate 3 having a predetermined thickness is first provided, wherein the substrate 3 has a first surface 31 and a second surface 32. The substrate 3 is cleaned with, for example methanol, and positioned on the working stage 18 of the optic operation mechanism 1. In the instant embodiment, a sheet of borosilicate glass having a thickness between 100-300 µm is used as the substrate 3, but it is apparent that the present invention is not limited to such a selection. Other substrates, such as quartz glass and soda-lime glass, which are glass materials having reflowing characteristics, or thermoplastic materials (not including plastics) having reflowing characteristics. The substrate 3 can be of a preferred thickness of 0.01-10 mm.

Thereafter, the working energy source generator 4 is properly set to face the first reflector 21. In the instant embodiment, a 25W CO₂ laser device is employed to serve as the working energy source generator 4 and the operation of the laser device requires two different inputs, one being continual small pulse signals, which function to pre-ionize the carbon dioxide gas to facilitate the excitation of laser beam and the other being a pulse-width modulated (PWM) command, which functions to excite the laser beam for effecting hole drilling on the substrate 3. In the instant embodiment, the continual small pulse signals include signals of 5 KHz, 5 Vpp, and 0.5% duty cycle. The PWM command includes signals of 400 Hz, 5 Vpp, and 3.6% duty cycle. The drilling operation is carried out with signals of five durations.

The positions of the laser beam modulation lens set 2 and the working stage 18 are then adjusted. Since the fourth reflector carrier 14, the third support member 17, and the working stage 18 are interfaced by a stepping motor to a computer device, an operator may operate the computer device to control the stepping motor for moving the working stage 18 up and down along the stage coupling edge 151 of the first support member 15 in a direction of Z-axis to effect adjustment of the distance between the focus lens 25 and the working stage 18 and thus set a proper focusing distance for the laser beam. Thus, the laser beam can be made focused on a focusing spot of around 1-500 µm on the first surface 31 of the substrate 3.

Further, the operator may use the computer device to control the stepping motor so that the fourth reflector carrier 14 is driven to move back and forth along the carrier coupling edge 172 of the third support member 17 in the direction of X-axis and also the third support member 17 is driven to move back and forth along the support-member coupling edge 161 of the second support member 16 in the direction of Y-axis to thereby define various drilling sites on the first surface 31 of the substrate 3, where hole drilling is to be effected, thereby allowing formation of a micro-hole array. This can be integrated with micro-fluidic systems for applications in high throughput screening, and is also applicable to distribution of fluid, such as forming a micro-nozzle with the unique configuration of the micro-hole in accordance with the present invention.

Once the positions of the laser beam modulation lens set 2 and the working stage 18 are properly set, hole drilling is carried out. Since the instant embodiment uses a laser generator to serve as the working energy source generator 4, manipulation of laser excitation signal allows excitation of the working energy source generator 4 to generate a working energy source 41 for a predetermined period of time. The working energy source 41 includes a laser beam of having predetermined number, duration, and frequency of laser pulse. The working energy source 41 is reflected to the second reflector 22 by the first reflector 21 and further reflected by the second reflector 22 toward the third reflector 23, followed by reflection by the third reflector 23 toward the fourth reflector 24 and further reflection by the fourth reflector 24 toward the focus lens 25, which then focuses the working energy source 41 to form a focused laser beam 42 projecting to a selected drilling site on the first surface 31 of the substrate 3.

The focused laser beam 42 then causes melting of the material of the substrate 3 at the selected drilling site on the first surface 31 of the substrate 3, thereby forming a first opening 51 in the first surface 31 of the substrate 3. Proceeding application of the focused laser beam 42 to the substrate 3 forms, in the substrate 3, a working energy entering section 54 that commences under the first surface 31 of the substrate 3, until the focused laser beam 42 just penetrate through the second surface 32 of the substrate 3. As such, the micro-hole structure 5 that extends through both the first surface 31 and the second surface 32 of the substrate 3 is made.

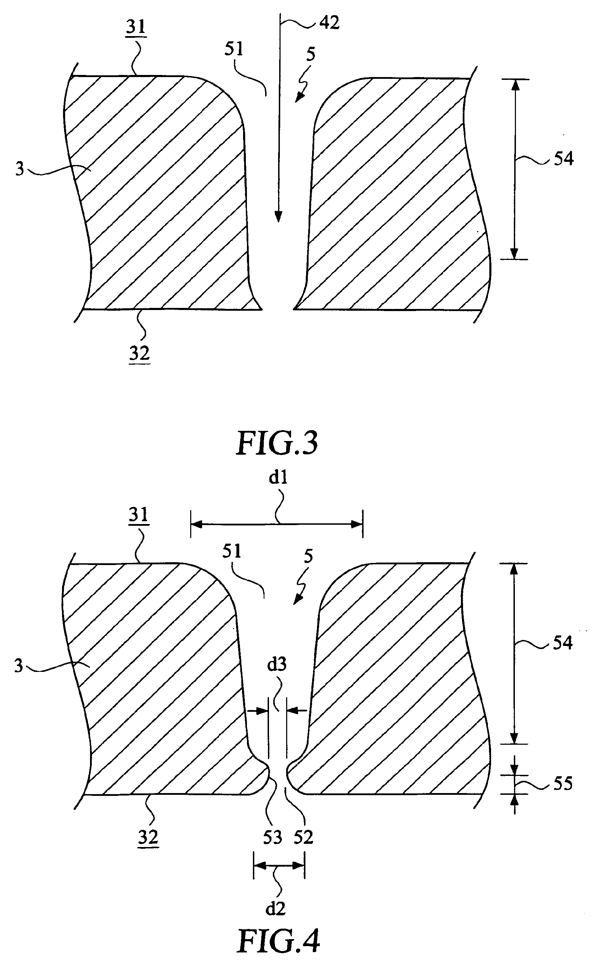

Thereafter, as shown in Figure 4, a portion of the substrate 3 that is close to the second surface 32 of the substrate 3 and is melted by the focused laser beam 42 to form a melt reflows in a direction opposite to the incidence of the focused laser beam 42 for a short distance before it gets solidified. Thus, the micro-hole structure 5 forms a reflow section 55 that is formed in the substrate 3 immediately next to the second surface 32 of the substrate 3 and defines a second opening 52 in the second surface 32 of the substrate 3. The junction between the working energy entering section 54 and the reflow section 55 (namely a junction between bore sections respectively extending from the first and second openings 51, 52) defines a through hole section 53. Apparently, the reflow section 55 extends from the second opening 52 to the internal through hole section 53, and the bore diameter of the reflow section 55 converges from the second opening 52 to the internal through hole section 53.

The working energy entering section 54 extends from the first opening 51 to the internal through hole section 53 and the bore diameter of the working energy entering section 54 is convergent from the first opening 51 toward the through hole section 53. The second opening 52 is substantially aligned with and in communication with the first opening 51. The internal through hole section 53 is close to the second opening 52. With the first opening 51, the second opening 52, and the internal through hole section 53 respectively having a first opening diameter d1, a second opening diameter d2, and a through hole section diameter d3, the through hole section diameter d3 is less than the first opening diameter d1 and is also less than the second opening diameter d2. The through hole section 53 is located closer to the second opening 52 than the first opening 51. Thus, the micro-hole structure 5 formed with the above described reflowing process is of an unsymmetrical hourglass shape.

In the instant embodiment, the second opening diameter d2 so formed is around the size of a cell, about 20-30 µm and is thus well applicable to trapping and positioning of a cell. The size of the through hole section diameter d3 is substantially identical to that of a micropipette used in known patch-clamp techniques, about 2-10 µm, and is thus well suitable for study of electrophysiological response of ion channel of the cellular membrane. The unique hourglass configuration of the present invention facilitates smooth introduction of a cell into the first opening 51 of the micro-hole 5 and also enhances seal resistance between the cell and the glass material of the substrate up to even 109 ohms. This allows the measurement of the tiny current induced by movement of ions through the cell surface.

The through hole section diameter d3 formed in accordance with the present invention is of a size about 500 nanometers to 200 micrometers. It is noted that to fabricate a through hole section having a diameter between 500 nanometers to 200 micrometers in a substrate 3 of a thickness of 0.01-10 millimeters, the above-discussed working energy source 41 (which in the instant embodiment includes a laser beam having a predetermined power) carrying a predetermined power is used for a predetermined period of time of emission. Parameters that affect the emission of the laser energy include number, duration, and frequency of laser pulses. For example, the number of laser pulses can be set in a range of 1-10¹⁰, and the pulse duration and pulse frequency are adjusted accordingly. The period of time of radiation is set in accordance with the thickness and material of the substrate 3 and the size of the micro-hole to be fabricated. Besides the gas laser beam generator mentioned above, the working energy source generator 4 can also be a solid laser beam generator or a semiconductor laser beam generator; the working energy source generator 4 can be a pulse laser beam generator or a continuous laser beam generator.

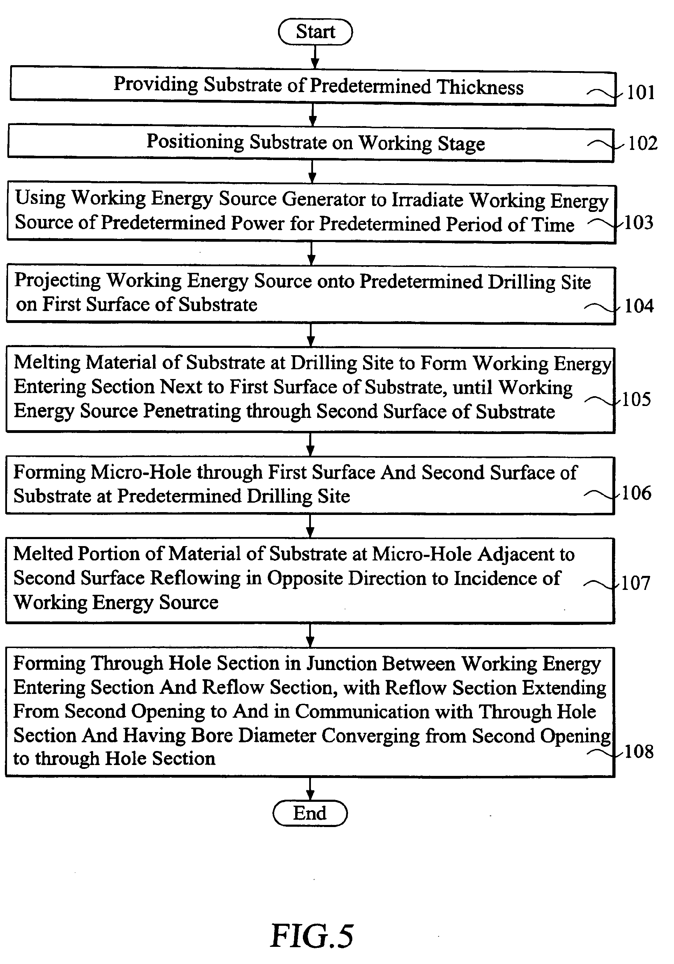

Referring to Figure 5, together with the above discussed drawings, the method in accordance with the present invention will be further described.

Firstly, a substrate of a predetermined thickness is provided (step 101). The substrate has a first surface and a second surface. The substrate is then positioned on a working stage (step 102).

A working energy source generator is then used to irradiate a working energy source of a predetermined working energy for a predetermined period of time (step 103). The working energy source is projected through a laser beam modulation lens set onto a predetermined drilling site on the first surface of the substrate (step 104). The working energy source projected onto the first surface of the substrate may either carry a fixed working energy or a gradually decreased working energy.

The working energy source melts the material of the substrate at the drilling site on the first surface to form a working energy entering section in the substrate next to the first surface of the substrate, until the working energy source penetrates through a second surface of the substrate (step 105). As a consequence, a micro-hole is formed through both the first surface and the second surface of the substrate at the predetermined drilling site on the first surface of the substrate (step 106).

The portion of the material of the substrate at the micro-hole adjacent to the second surface of the substrate, which is in a molten condition due to be melted by the working energy source reflows in a direction opposite to the incidence of the working energy source (step 107), thereby forming a reflow section of the micro-hole in the substrate next to the second surface and defining a second opening in the second surface of the substrate, and thus forming a through hole section in the junction between the working energy entering section and the reflow section (step 108), with the reflow section extending from the second opening to and in communication with the through hole section and having a bore diameter converging from the second opening to the through hole section.

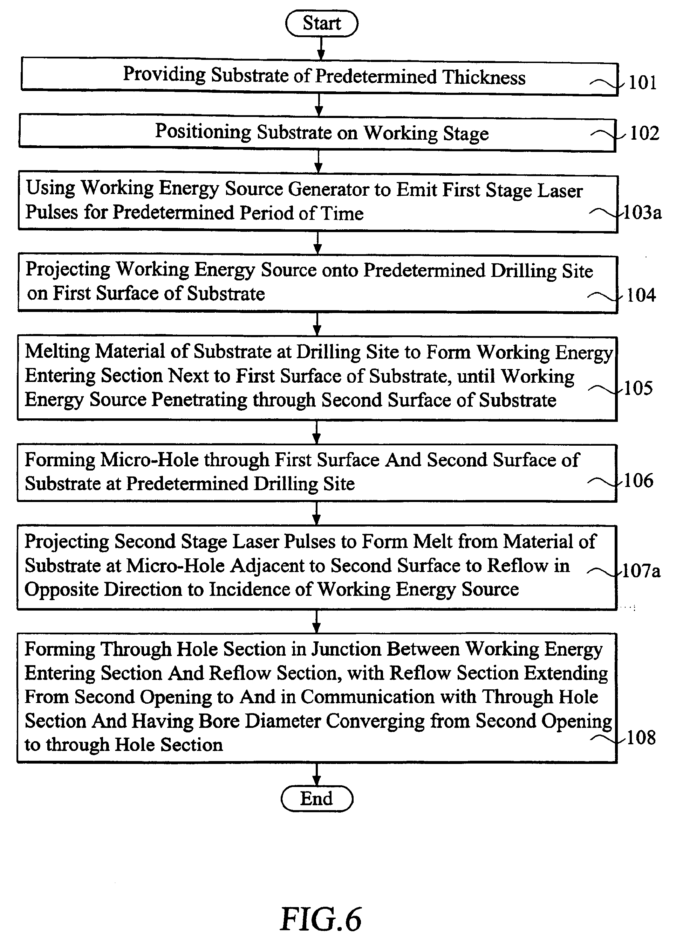

Figure 6 illustrates a flow chart of a method for fabricating a micro-hole structure in accordance with a second embodiment of the present invention. In the instant embodiment, the method includes steps, most of which are identical to the counterpart steps of the previous embodiment, and thus those identical steps are indicated with the same step numbering.

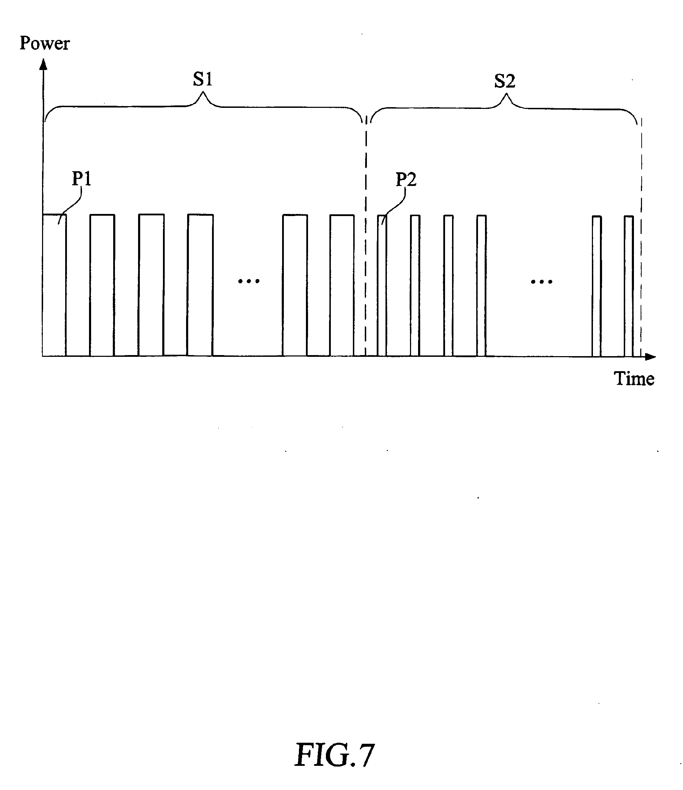

In the instant embodiment of Figure 6, the working energy source adopts a two-stage emission of laser pulses to form a micro-hole in a substrate to be machined. Figures 7 to 10 demonstrate various examples of the waveform of the two-stage emission of laser pulses that serves as the working energy source for making the micro-hole. In these drawings, the two-stage emission of laser pulses includes a first stage laser pulse sequence S1 and a second stage laser pulse sequence S2. The first stage laser pulse sequence S1 is comprised of a plurality of laser pulses P1 and the second stage laser pulse sequence S2 is similarly comprised of a plurality of laser pulses P2. The second stage laser pulse sequence S2 contains a working energy that is different from that of the first stage laser pulse sequence S1.

In Figure 7, each of the pulses P2 of the second stage laser pulse sequence S2 has a pulse width less than a pulse width of each of the pulses P1 of the first stage laser pulse sequence S1, but the frequency of the second stage laser pulse sequence S2 is identical as that of the first stage laser pulse sequence S1. In other words, the second stage laser pulse sequence S2 contains a working energy that is smaller than that of the first stage laser pulse sequence S1.

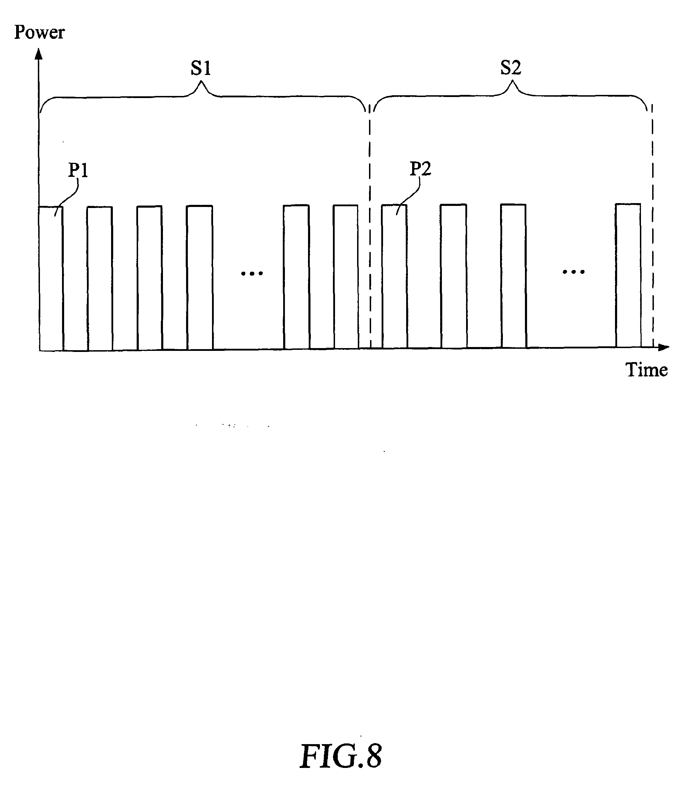

Figure 8 shows a second example of the waveform of the two-stage emission of laser pulses. In this example, each of the pulses P2 of the second stage laser pulse sequence S2 has a pulse width same as the pulse width of each of the pulses P1 of the first stage laser pulse sequence S1, but the frequency of the second stage laser pulse sequence S2 is lower than that of the first stage laser pulse sequence S1.

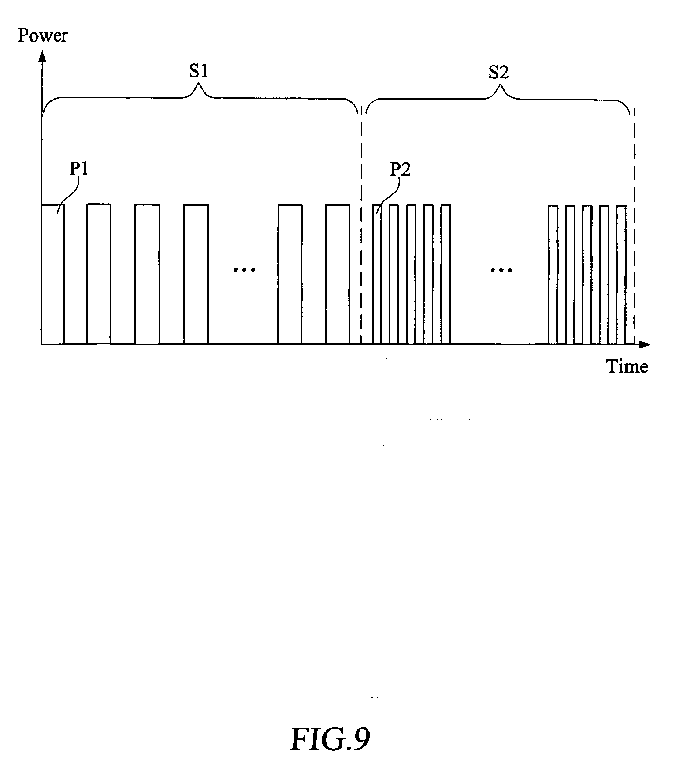

A third example is shown in Figure 9, in which each of the pulses P2 of the second stage laser pulse sequence S2 has a pulse width less than a pulse width of each of the pulses P1 of the first stage laser pulse sequence S1, but the frequency of the second stage laser pulse sequence S2 is higher than that of the first stage laser pulse sequence S1.

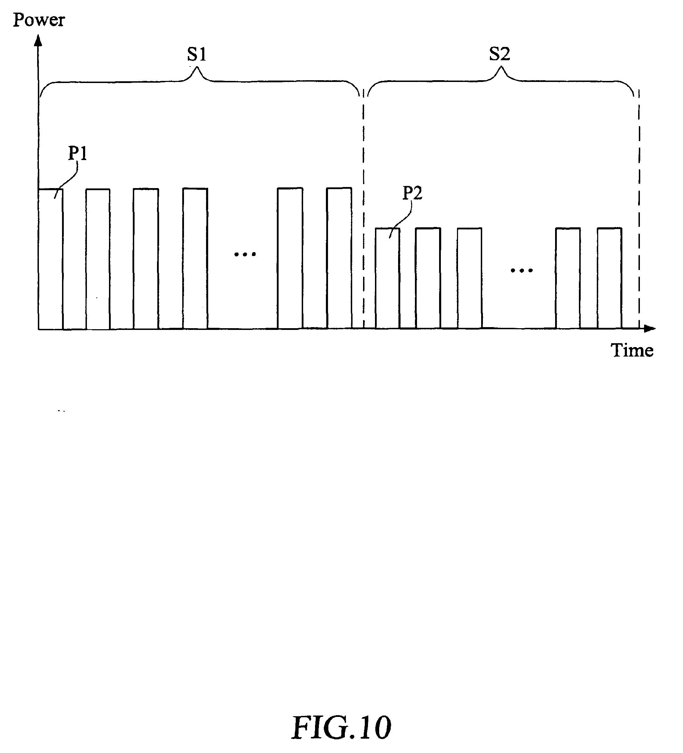

In the above three examples, all the pulses in the first and second stage laser pulse sequences have identical power. In the fourth example shown in Figure 10, each of the pulses P2 of the second stage laser pulse sequence S2 has a pulse width same as the pulse width of each of the pulses P1 of the first stage laser pulse sequence S1, and the frequency of the second stage laser pulse sequence S2 is identical as that of the first stage laser pulse sequence S1. However, each of the pulses P2 of the second stage laser pulse sequence S2 has a power smaller than that of the each of the pulses P1 of the first stage laser pulse sequence S1. In other words, the amplitude of the pulse P2 of the first stage laser pulse sequence S2 is smaller than that of the pulse P1 of the first stage laser pulse sequence S1.

Although two-stage emission of laser pulses is used in the present invention, it is apparent that the number of stages of emission of laser pulses can be varied in accordance with practical applications. In other words, two or more stages emission of laser pulses can be used.

Referring simultaneously to Figure 6 and Figures 7 to 10, firstly, a substrate of a predetermined thickness is provided (step 101). The substrate has a first surface and a second surface. The substrate is then positioned on a working stage (step 102).

A working energy source generator is then used to emit a stage laser pulse sequence S1 of first stage laser pulses serving as a first stage working energy source for a predetermined period of time (step 103a). The working energy source is projected through a laser beam modulation lens set onto a predetermined drilling site on the first surface of the substrate (step 104).

The working energy source melts the material of the substrate at the drilling site on the first surface to form a working energy entering section in the substrate next to the first surface of the substrate, until the working energy source penetrates through a second surface of the substrate (step 105). As a consequence, a micro-hole is formed through both the first surface and the second surface of the substrate at the predetermined drilling site on the first surface of the substrate (step 106).

Then, a second stage laser pulse sequence S2 of second stage laser pulses, serving as a second stage working energy source, is projected to the micro-hole. At this time, the portion of the material of the substrate at the micro-hole adjacent to the second surface of the substrate, which is in a molten condition due to be melted by the second stage working energy source, reflows in a direction opposite to the incidence of the second stage working energy source (step 107a), thereby forming a reflow section of the micro-hole in the substrate next to the second surface and defining a second opening in the second surface of the substrate, and thus forming a through hole section in the junction between the working energy entering section and the reflow section (step 108), with the reflow section extending from the second opening to and in communication with the through hole section and having a bore diameter converging from the second opening to the through hole section

The working energy contained in the second stage laser pulse sequence S2 is different from that of the first stage laser pulse sequence S1, whereby precise control of the bore diameter can be realized at the time when the reflow section of the micro-hole is being formed in the substrate next to the second surface. In the above embodiments, the working energy contained in the second stage laser pulse sequence S2 is less than that of the first stage laser pulse sequence S1.

## Claims

1. A method for making a micro-hole structure (5), wherein the method comprises the steps of
(a) providing a substrate (3) having a first surface (31) and a second surface (32);
(b) projecting a working energy source onto a predetermined drilling site on the first surface (31) of the substrate (3); and
(c) melting a portion of the substrate (3) at the drilling site with the working energy source in a predetermined period of time of projection of the working energy source to thereby form a working energy entering section (54) in the substrate (3) next to the first surface (31) until the working energy source penetrates through the second surface (32) of the substrate (3) to form a micro-hole that extends through both the first and second surfaces (31, 32) of the substrate (3); **characterised by**
(d) forming a melt by melting a portion of the substrate (3) in the micro-hole next to the second surface (32) with the working energy source, and allowing the melt to reflow in a direction opposite to the projection of the working energy source and solidify to thereby form a reflow section (55) in the micro-hole next to the second surface (32) of the substrate (3), also defining a second opening (52) in the second surface (32) of the substrate (3), and a through hole section (53) between the working energy entering section (54) and the reflow section (55) with the reflow section (55) extending from the second opening (52) to and in communication with the through hole section (53) and having a bore diameter converging from the second opening (52) toward the through hole section (53).

2. The method as claimed in Claim 1, wherein the working energy source comprises a laser beam.

3. The method as claimed in Claim 2, wherein the laser beam is projected through a laser beam modulation lens set (2) to the predetermined drilling site on the first surface (31) of the substrate (3).

4. The method as claimed in Claim 3, wherein the laser beam modulation lens set (2) comprises at least one reflector (21, 22, 23, 24) and a focus lens (25), the laser beam being redirected by the at least one reflector (21, 22, 23, 24) through the focus lens (25) to be focused on the predetermined drilling site of the first surface (31) of the substrate (3).

5. The method as claimed in Claim 4, wherein the at least one reflector (21, 22, 23, 24), the focus lens (25), and the substrate (3) are arranged in an optic operation mechanism (1), whereby the optic operation mechanism (1) is controllable to adjust positions of the reflector (21, 22, 23, 24), the focus lens (25), and the substrate (3) to set a distance for focusing the laser beam and to set drilling sites at which micro-hole structures (5) are to be formed.

6. The method as claimed in Claim 1, wherein the substrate (3) has a thickness of 0.01-10 millimeters.

7. The method as claimed in Claim 1, wherein the substrate (3) comprises glass.

8. The method as claimed in Claim 1, wherein the substrate (3) comprises a thermal plastic material having reflowing characteristics.

9. The method as claimed in Claim 2, wherein the laser beam is emitted by a laser beam generator.

10. The method as claimed in Claim 2, wherein the working energy source projected onto the first surface (31) of the substrate (3) in step (b) carries a fixed working energy.

11. The method as claimed in Claim 2, wherein the working energy source projected onto the first surface (31) of the substrate (3) in step (b) carries a gradually decreased working energy.

12. The method as claimed in Claim 1, wherein the working energy source includes a first stage working energy source and a second stage working energy source carrying a predetermined second stage working energy different from that of the first stage working energy source, and the working energy entering section (54) is formed by the first stage working energy source before the melt is formed by the second stage working energy source.

13. The method as claimed in Claim 12, wherein the first stage working energy source comprises a first stage laser pulse sequence with a plurality of laser pulses, and the second stage working energy source comprises a second stage laser pulse sequence with a plurality of laser pulses, and each of the laser pulses of the second stage laser pulse sequence has a pulse width less than a pulse width of each of the laser pulses of the first stage laser pulse sequence.

14. The method as claimed in Claim 12, wherein the first stage working energy source comprises a first stage laser pulse sequence with a plurality of laser pulses, and the second stage working energy source comprises a second stage laser pulse sequence with a plurality of laser pulses, and the second stage laser pulse sequence has a frequency less than a frequency of the first stage laser pulse sequence.

15. The method as claimed in Claim 12, wherein the first stage working energy source comprises a first stage laser pulse sequence with a plurality of laser pulses, and the second stage working energy source comprises a second stage laser pulse sequence with a plurality of laser pulses, and the laser pulses of the second stage laser pulse sequence has an amplitude less than that of the laser pulses of the first stage laser pulse sequence.

16. The method as claimed in any preceding Claim, wherein the micro-hole structure (5) defines a first opening (51) having a first diameter in the first surface (31) of the substrate (3), the second opening (52) has a second diameter, and the through hole section (53) has a third diameter which is smaller than both the first and second diameters.

17. The method as claimed in Claim 19, wherein the third diameter of the through hole section (53) is in a range between 500 nanometres and 200 micrometres.

## Patentansprüche

1. Methode zur Herstellung eines Mikroloch-Gefüges (5), umfassend die nachfolgenden Schritte:
(a) Bereitstellung eines Substrats (3) mit einer ersten Fläche (31) und einer zweiten Fläche (32);
(b) Projizieren einer Arbeitsenergiequelle auf eine vorgegebene Bohrungsstelle auf der ersten Fläche (31) des Substrats (3); und
(c) Einschmelzen eines Teils des Substrats (3) an der Bohrungsstelle mit der Arbeitsenergiequelle über einen vorgegebenen Projektionszeitraum dieser Arbeitsenergiequelle zur Ausbildung eines Energieeintrittsbereichs (54) im Substrat (3) neben der ersten Fläche (31), bis die Arbeitsenergiequelle die zweite Fläche (32) des Substrats (3) unter Ausbildung eines Mikrolochs durchdringt, das sich durch die ersten und zweiten Flächen (31,32) des Substrats (3) erstreckt; **gekennzeichnet durch**
(d) Bildung einer Schmelze **durch** Ausschmelzen eines Teils des Substrats (3) in dem Mikroloch in der Nähe der zweiten Fläche (32) mit der Arbeitsenergiequelle und Ermöglichen des Rückflusses der Schmelze in einer der Projektionsrichtung der Arbeitsenergiequelle entgegengesetzten Richtung und Erstarrung der Schmelze, so dass sich ein Rückstromteil (55) in dem an die zweite Fläche (32) des Substrats (3) angrenzenden Mikroloch bildet und des Weiteren eine zweite Öffnung (52) in der zweiten Fläche (32) des Substrats (3) definiert wird, sowie ein durchgehender Lochabschnitt (53) zwischen dem Arbeitsenergie-Eintrittsteil (54) und dem Rückstromteil (55), wobei sich der Rückstromteil (55) ausgehend von der zweiten Öffnung (52) bis zum durchgehenden Lochabschnitt (53) erstreckt und mit diesem kommuniziert und einen Bohrungsdurchmesser aufweist, der von der zweiten Öffnung (52) nach oben in Richtung des durchgehenden Lochabschnitts (53) konvergiert.

2. Methode gemäß Anspruch 1, bei der die Arbeitsenergiequelle einen Laserstrahl umfasst.

3. Methode gemäß Anspruch 2, bei der der Laserstrahl durch einen Satz von Laserstrahl-Modulierlinsen (2) auf eine vorgegebene Stelle der ersten Fläche (31) des Substrats (3) projiziert wird.

4. Die Methode gemäß Anspruch 3, bei der Satz von Laserstrahl-Modulierlinsen (2) wenigstens einen Reflektor (21,22,23,24) und eine Fokussierlinse (25) aufweist, wobei der Laserstrahl von wenigstens einem Reflektor (21, 22, 23, 24) durch die Fokussierlinse (25) umgelenkt wird, so dass der Brennpunkt auf der vorgegebenen Bohrungsstelle auf der ersten Fläche (31) des Substrats (3) zu liegen kommt.

5. Die Methode gemäß Anspruch 4, bei der wenigstens ein Reflektor (21, 22, 23, 24), die Fokussierlinse (25) und das Substrat (3) auf einer optischen Bankmechanik (1) angeordnet sind und die optische Bankvorrichtung (1) so verstellbar ausgeführt ist, dass sich die Positionen des Reflektors (21, 22, 23, 24), der Fokussierlinse (25) und des Substrats zur Einrichtung des Fokussierabstands des Laserstrahls und zur Platzierung der herzustellenden Mikroloch-Gefügen (5) einstellen lassen.

6. Die Methode gemäß Anspruch 1, bei der das Substrat (3) eine Dicke von 0,01-10 Millimeter hat.

7. Die Methode gemäß Anspruch 1, bei der das Substrat (3) aus Glas besteht.

8. Die Methode gemäß Anspruch 1, bei der das Substrat ein thermoplastischer Werkstoff mit gewissen Rückflusseigenschaften ist.

9. Die Methode gemäß Anspruch 2, bei der der Laserstrahl von einem Laserstrahlemitter übertragen wird.

10. Die Methode gemäß Anspruch 2, bei der die in Schritt (b) auf die erste Fläche (31) des Substrats (3) projizierte Arbeitsenergiequelle eine feste Arbeitsenergiemenge überträgt.

11. Die Methode gemäß Anspruch 2, bei der die in Schritt (b) de auf die erste Fläche (31) des Substrats (3) projizierte Arbeitsenergie eine sich allmählich reduzierende Arbeitsenegiemenge überträgt.

12. Die Methode gemäß Anspruch 1, bei der die Arbeitsenergiequelle eine erste Stufe für eine erste Arbeitsenergiemenge und eine zweite Stufe für eine zweite von der ersten Stufe abweichende Arbeitsenergiemenge aufweist und der Arbeitsenergie-Eintrittsteil (54) von der ersten Arbeitsenergiequelle der ersten Stufe geformt wird, bevor die Schmelze von der Energie der zweiten Arbeitsenergiequelle gebildet wird.

13. Die Methode gemäß Anspruch 12, bei der die Arbeitsenergiequelle der ersten Stufe eine erste Laserimpulsfolge mit einer Vielzahl von Laserimpulsen umfasst, während die Arbeitsenergiequelle der zweiten Stufe eine zweite Laserimpulsfolge mit einer Vielzahl von Laserimpulsen umfasst, bei der jeder der Laserimpulse der Impulsfolge eine geringere Impulsbreite aufweist als die Impulsbreite jedes der Laserimpulsfolge der ersten Stufe.

14. Die Methode gemäß Anspruch 12, bei der die Arbeitsenergiequelle der ersten Stufe eine erste Laserimpulsfolge mit einer Vielzahl von Laserimpulsen umfasst, während die Arbeitsenergiequelle der zweiten Stufe eine zweite Laserimpulsfolge mit einer Vielzahl von Laserimpulsen umfasst, wobei die zweite Laserimpulsfolge eine niedrigere Frequenz aufweist als die Frequenz der Laserimpulsfolge der ersten Stufe.

15. Die Methode gemäß Anspruch 12, bei der die Arbeitsenergiequelle der ersten Stufe eine erste Laserimpulsfolge der ersten Stufe mit einer Vielzahl von Laserimpulsen erzeugt und bei der die Arbeitsenergiequelle der zweiten Stufe eine zweite Laserimpulsfolge mit einer Vielzahl von Laserimpulsen erzeug, wobei die zweite Laserimpulsfolge eine niedrigere Amplitude aufweist als die Amplitude der Laserimpulsfolge der ersten Stufe.

16. Methode gemäß einem beliebigen der vorhergehenden Ansprüche, bei der das Mikroloch-Gefüge (5) eine erste Öffnung (51) mit einem ersten Durchmesser (31) in der ersten Fläche des Substrats (3) definiert, die zweite Öffnung (52) einen zweiten Durchmesser hat, und der durchgehende Lochabschnitt (53) einen dritten Durchmesser aufweist, der geringer ist als der erste und zweite Durchmesser.

17. Die Methode gemäß Anspruch 19, bei der der dritte Durchmesser des durchgehenden Lochabschnitts (53) einen Querschnitt im Bereich von 500 Nanometer und 200 Mikrometer aufweist.

## Revendications

1. Procédé permettant de réaliser une structure à microtrous (5), dans lequel le procédé comporte les étapes consistant à :
(a) mettre en oeuvre un substrat (3) ayant une première surface (31) et une seconde surface (32) ;
(b) projeter une source d'énergie active sur un site de perçage prédéterminé sur la première surface (31) du substrat (3) ; et
(c) faire fondre par fusion une partie du substrat (3) au niveau du site de perçage à l'aide de la source d'énergie active pendant une période de temps prédéterminée de projection de la source d'énergie active pour de ce fait former une section d'entrée d'énergie active (54) dans le substrat (3) à côté de la première surface (31) jusqu'à ce que la source d'énergie active pénètre au travers de la seconde surface (32) du substrat (3) pour former un microtrou qui s'étend à la fois au travers de la première et de la seconde surfaces (31, 32) du substrat (3); **caractérisé par**
(d) la formation d'une fusion en faisant fondre par fusion une partie du substrat (3) dans le microtrou à côté de la seconde surface (32) à l'aide de la source d'énergie active, et en laissant la fusion fondre par refusion dans une direction opposée à la projection de la source d'énergie active et se solidifier pour de ce fait former une section de refusion (55) dans le microtrou à côté de la seconde surface (32) du substrat (3), également la définition d'une seconde ouverture (52) dans la seconde surface (32) du substrat (3), et une section de trou traversant (53) entre la section d'entrée d'énergie active (54) et la section de refusion (55), la section de refusion (55) s'étendant depuis la seconde ouverture (52) jusqu'à, et en communication avec, la section de trou traversant (53) et ayant un diamètre d'alésage convergeant depuis la seconde ouverture (52) vers la section de trou traversant (53).

2. Procédé selon la revendication 1, dans lequel la source d'énergie active comporte un faisceau laser.

3. Procédé selon la revendication 2, dans lequel le faisceau laser est projeté au travers d'un ensemble de type lentille de modulation de faisceau laser (2) jusque sur le site de perçage prédéterminé sur la première surface (31) du substrat (3).

4. Procédé selon la revendication 3, dans lequel l'ensemble de type lentille de modulation de faisceau laser (2) comporte au moins un réflecteur (21, 22, 23, 24) et une lentille de focalisation (25), le faisceau laser étant redirigé par ledit au moins un réflecteur (21, 22, 23, 24) par le biais de la lentille de focalisation (25) à des fins de focalisation sur le site de perçage prédéterminé de la première surface (31) du substrat (3).

5. Procédé selon la revendication 4, dans lequel ledit au moins un réflecteur (21, 22, 23, 24), la lentille de focalisation (25), et le substrat (3) sont arrangés dans un mécanisme de fonctionnement optique (1), ce par quoi le mécanisme de fonctionnement optique (1) est en mesure d'être commandé pour ajuster les positions du réflecteur (21, 22, 23, 24), de la lentille de focalisation (25), et du substrat (3) pour régler une distance à des fins de focalisation du faisceau laser et pour déterminer des sites de perçage sur lesquels des structure à microtrous (5) doivent être formées.

6. Procédé selon la revendication 1, dans lequel le substrat (3) a une épaisseur allant de 0,01 à 10 millimètres.

7. Procédé selon la revendication 1, dans lequel le substrat (3) comporte du verre.

8. Procédé selon la revendication 1, dans lequel le substrat (3) comporte un matériau plastique thermique ayant des caractéristiques de refusion.

9. Procédé selon la revendication 2, dans lequel le faisceau laser est émis par un générateur de faisceaux laser.

10. Procédé selon la revendication 2, dans lequel la source d'énergie active projetée sur la première surface (31) du substrat (3) au cours de l'étape (b) porte une énergie active fixe.

11. Procédé selon la revendication 2, dans lequel la source d'énergie active projetée sur la première surface (31) du substrat (3) au cours de l'étape (b) porte une énergie active graduellement décroissante.

12. Procédé selon la revendication 1, dans lequel la source d'énergie active comprend une source d'énergie active de premier étage et une source d'énergie active de second étage portant une énergie active de second étage prédéterminée différente de celle de la source d'énergie active de premier étage, et la section d'entrée d'énergie active (54) est formée par la source d'énergie active de premier étage avant la formation de la fusion par la source d'énergie active de second étage.

13. Procédé selon la revendication 12, dans lequel la source d'énergie active de premier étage comporte une séquence d'impulsions laser de premier étage avec une pluralité d'impulsions laser, et la source d'énergie active de second étage comporte une séquence d'impulsions laser de second étage avec une pluralité d'impulsions laser, et chacune des impulsions laser de la séquence d'impulsions laser de second étage a une largeur d'impulsion inférieure à une largeur d'impulsion de chacune des impulsions laser de la séquence d'impulsions laser de premier étage.

14. Procédé selon la revendication 12, dans lequel la source d'énergie active de premier étage comporte une séquence d'impulsions laser de premier étage avec une pluralité d'impulsions laser, et la source d'énergie active de second étage comporte une séquence d'impulsions laser de second étage avec une pluralité d'impulsions laser, et la séquence d'impulsions laser de second étage a une fréquence inférieure à une fréquence de la séquence d'impulsions laser de premier étage.

15. Procédé selon la revendication 12, dans lequel la source d'énergie active de premier étage comporte une séquence d'impulsions laser de premier étage avec une pluralité d'impulsions laser, et la source d'énergie active de second étage comporte une séquence d'impulsions laser de second étage avec une pluralité d'impulsions laser, et les impulsions laser de la séquence d'impulsions laser de second étage a une amplitude inférieure à celle des impulsions laser de la séquence d'impulsions laser de premier étage.

16. Procédé selon l'une quelconque des revendications précédentes, dans lequel la structure à microtrous (5) définit une première ouverture (51) ayant un premier diamètre dans la première surface (31) du substrat (3), la seconde ouverture (52) a un second diamètre, et la section de trou traversant (53) a un troisième diamètre qui est inférieur à la fois au premier et au second diamètres.

17. Procédé selon la revendication 19, dans lequel le troisième diamètre de la section de trou traversant (53) est situé dans une plage entre 500 nanomètres et 200 micromètres.
